# EUROPÄISCHE PATENTANMELDUNG

(11) **EP 2 447 625 A2**
(43) Veröffentlichungstag der Anmeldung: **02.05.2012**
(21) Anmeldenummer: 11008665.9
(22) Anmeldetag: 28.10.2011
(51) Int. Cl.: F25B 37/00, F25B 17/08

(54) **Reaktor**

(30) Priorität: 28.10.2010 DE 102010049635
(71) Anmelder: Vaillant GmbH, 42859 Remscheid (DE)
(72) Erfinder: Sick, Jan-Hinrich, 42597 Remscheid (DE); Salg, Frank, 42897 Remscheid (DE); Spahn, Hans-Josef, 40699 Erkrath (DE)
(74) Vertreter: Hocker, Thomas

(57) **Zusammenfassung**

Die Erfindung betrifft einen Ab- bzw. Ad-/Desorber als Reaktor für eine Adsorptions- oder Absorptionswärmepumpe oder für einen Sorptionswärmespeicher, welcher mit einem schüttbaren Medium als Sorptionsmittel gefüllt ist.

Die Effizienz des Reaktors kann gesteigert werden, indem die Wärmeleitung des in einen Reaktor eingebrachten Schüttguts 2 durch Zusammenpressung erhöht wird. Dabei wird die Elastizität der Reaktorwand 1 genutzt, der bei einer Druckdifferenz zwischen Umgebung und Innenraum das Schüttgut zusammenpresst.

Weiterhin wird erfindungsgemäß die Wärmeleitung durch eingebrachte Heatpipes 3 verbessert.

## Beschreibung

Die Erfindung betrifft einen Reaktor für eine Adsorptions- oder Absorptionswärmepumpe oder für einen Sorptionswärmespeicher.

Adsorptions- oder Absorptionswärmepumpen auf der Basis fester Sorptionsmittel und verdampfbarer Flüssigkeiten als Arbeitsmittel basieren auf einem zyklischen Prozess, in welchem der im sorbierten Zustand bei sonst gleichen Bedingungen verminderte Dampfdruck des Arbeitsmittels die Transformation eines Wärmestroms von einem niedrigerem Temperaturniveau in einen Wärmestrom auf höherem Temperaturniveau ermöglicht. Der Behälter mit dem aktiven Material (Sorptionsmittel) wird als Reaktor bezeichnet.

Unterbricht man den zyklischen Prozess in einem Zustand, bei welchem das Sorptionsmittel ganz oder teilweise vom Arbeitsmittel entladen ist, so kann man den Reaktor auch als Wärmespeicher verwenden. Zu diesem Zweck muss durch eine geeignete Absperrvorrichtung der erneute Zutritt von Arbeitsmittel in den Reaktor verhindert werden. Um zu einem späteren Zeitpunkt die Sorptionswärme (bzw. Nutzkälte) verfügbar zu machen, gestattet man durch Öffnen der Absperrvorrichtung wieder den Zutritt von Arbeitsmittel in den Reaktor.

Bei Adsorptions- oder Absorptionswärmepumpen mit festen Sorptionsmitteln werden häufig im Reaktor schüttgutförmige Medien verwendet, welche sich günstig in großer Menge herstellen lassen und welche bei entsprechender Korngrößenverteilung eine gute Gasdurchlässigkeit der Schüttung gewährleisten. Für eine gute Effizienz des Sorptionsprozesses wird der Reaktor häufig bei sehr niedrigem Druck betrieben, in der Nähe des Vakuums. Folglich findet der zur Unterhaltung des Prozesses notwendige Wärmeaustausch im Sorptionsmittel überwiegend durch Wärmeleitung im typischerweise porösen und thermisch schlecht leitfähigen Festkörper statt. Die Beiträge zur Wärmeleitung durch die Gasphase und durch Wärmestrahlung sind relativ klein.

Aus der Patentschrift DE 102005001056 B4 ist die Möglichkeit bekannt, die Granulatkörner durch Einbringen eines Zusatzstoffes mit hoher Wärmeleitfähigkeit oder einer Mischung von Zusatzstoffen thermisch zu koppeln und zu verfestigen. Diese Verwendung von Zusatzstoffen ist jedoch stets mit den Nachteilen verbunden, dass die Gasdurchlässigkeit der Schüttung vermindert wird, und dass außerdem die thermisch träge Masse im Vergleich zur Masse des aktiven Sorptionsmittels wächst. Beide Nachteile vermindern jedoch die Effizienz des Sorptionsapparats.

Es ist daher Aufgabe der Erfindung, gleichzeitig den Anteil des aktiven Sorptionsmittels, die Gasdurchlässigkeit und auch die Wärmeleitung im Reaktor zu maximieren.

Diese Aufgabe wird dadurch gelöst, dass das Schüttgut mit einer Druckbelastung mechanisch vorgespannt wird. Dies erfolgt erfindungsgemäß dadurch, dass die Reaktorwand elastisch ausgeführt wird und eine höhere Elastizität aufweist als die Schüttung. Unter höherer Elastizität der Reaktorwand wird verstanden, dass die Reaktorwand einer Verformung durch äußere Kräfte, wie dem Umgebungsdruck, weniger Widerstand entgegensetzt, als die von der Reaktorwand umschlossene Füllung aus schüttbarem Sorptionsmittel. Dabei ist die Elastizität der Reaktorwand so auf die Elastizität des Schüttguts abgestimmt, dass beim Aufbringen des Unterdrucks in dem Reaktor, d.h. beim Absaugen der Luft, sich die Reaktorwand zusammenzieht und unter der Wirkung des Umgebungsdrucks von außen auf das Schüttgut presst. Die Druckkräfte pflanzen sich innerhalb des Reaktors im Schüttgut fort und pressen die Schüttgut-Körner gegeneinander, so dass die Flächenberührung und damit die Wärmeübertragung verbessert wird. Gleichzeitig wird das vorher schüttbare Granulat durch die unter dem Druck entstehende Reibung zwischen den Körnern verfestigt und behält die eingenommene Form.

In einer alternativen Ausführungsvariante ist die Reaktorwand als biegeschlaffer Beutel ausgeführt, der erst beim Abpumpen mit dem darin enthaltenen Schüttgut eine feste Form annimmt.

Zusätzlich wird die Wärmeleitfähigkeit innerhalb des Reaktors verbessert, indem Heatpipes eingebracht werden. Dadurch wird die Wärmeleitfähigkeit verbessert, ohne die Wärmekapazität nennenswert zu erhöhen. Dies können sowohl rohrförmige wie auch flächig ausgebildete Heatpipes sein. Diese Heatpipes können fest eingebaut und mit der Behälterwand oder einem Wärmetauscher verbunden sein oder lose in das Schüttgut eingelegt sein.

Ein Verfahren zum Herstellen eines erfindungsgemäßen Reaktors sieht vor, dass die Reaktorwand während des Befüllens mit dem schüttgutförmigen Sorptionsmittel und/oder während des Aufbringens des Unterdruckes in eine stützende Form eingebracht ist. Durch Reibung des isostatisch verpressten Granulats behält der fertig vorgespannte Reaktor seine Gestalt auch nach dem Ausformen. Dadurch wird sichergestellt, dass trotz der hohen Elastizität der Behälterwand die endgültige Form des Reaktors erreicht wird.

Gleichzeitig oder alternativ wird der Reaktor während des Befüllens mit dem schüttgutförmigen Sorptionsmittel mit einem höheren Druck beaufschlagt, als dies im späteren Betrieb der . Fall ist. Dieser Druck während des Befüllens kann z.B. Umgebungsdruck sein, oder ein noch höherer Druck, mit welchem die Reaktorwand während des Befüllens gedehnt wird. Dadurch wird erreicht, dass sich das schüttgutförmigen Sorptionsmittel durch den von außen aufgebrachten Druck verfestigt, sobald der Reaktor evakuiert, d.h. mit Unterdruck beaufschlagt wird. Auch wird durch den im Betrieb wirksamen Umgebungsdruck eine fortwährende und gleichmäßige Druckbelastung sichergestellt, welche Setzen oder Verschleiß der zusammengedrückten Körner ausgleicht, ohne dass sich die Eigenschaften des Reaktors erheblich verändern.

Die Erfindung wird nun anhand der Figur detailliert erläutert.

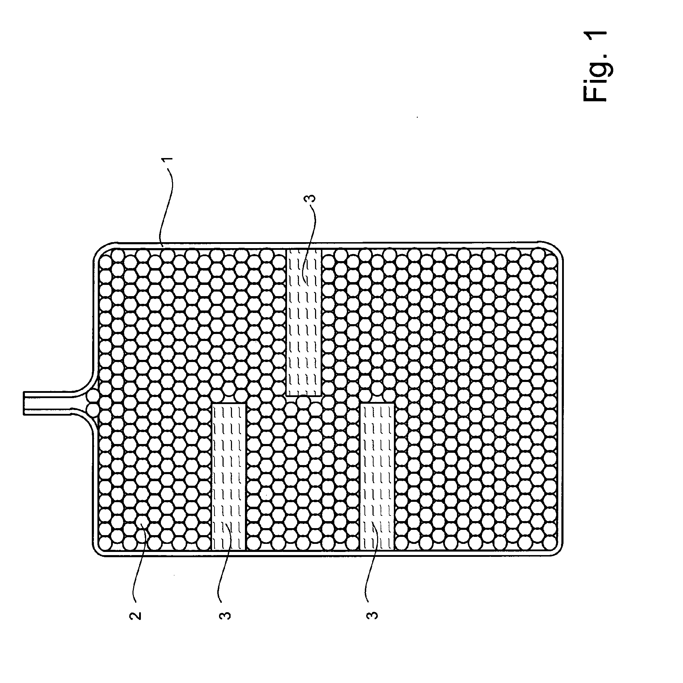

Figur 1 zeigt eine Schnittdarstellung durch den erfindungsgemäßen Reaktor. Der Reaktor wird aus einem schüttgutförmigen Sorptionsmittel 2 und einer Reaktorwand 1 gebildet. Das schüttgutförmige Sorptionsmittel 2 besteht dabei aus einzelnen Körnern. Im Inneren des Reaktors herrscht ein Unterdruck. Die Reaktorwand 1 ist gegenüber äußerem Druck nachgiebiger als das darin verpresste schüttgutförmige Sorptionsmittel 2. Dies hat zur Folge, dass die Reaktorwand 1 unter dem Einfluss des Umgebungsdrucks zusammengedrückt wird, gegen das Sorptionsmittel gepresst wird und damit die einzelnen Körner des schüttgutförmigen Sorptionsmittel 2 gegeneinander gepresst werden. Damit vermindert sich der Wärmeübergangswiderstand zwischen den Körnern des Sorptionsmittels. Die Reaktorwand 1 ist dabei so weich ausgeführt, dass sie ohne die Füllung instabil wäre. Bevorzugt ist die Reaktorwand 1 aus einem biegeschlaffen Material, z.B. einem Beutel hergestellt. Zusätzlich eingebrachte Heatpipes 3 verbessern die Wärmeleitfähigkeit innerhalb des Reaktors. Dabei können die Heatpipes 3 auch wärmeleitend mit der Reaktorwand 1 verbunden sein.

### Bezugszeichenliste

- 1: Reaktorwand
- 2: schüttgutförmiges Sorptionsmittel
- 3: Heatpipe

## Patentansprüche

1. Reaktor für eine Adsorptions- oder Absorptionswärmepumpe oder für einen Sorptionswärmespeicher mit mindestens einem Ab- oder Ad-/Desorber, mit einer Reaktorwand (1) und einem von der Reaktorwand (1) umschlossenen schüttbaren Sorptionsmittel (2), **dadurch gekennzeichnet, dass** die Elastizität der Reaktorwand (1) größer ist als die des schüttbaren Sorptionsmittels (2).

2. Reaktor nach Anspruch 1, **dadurch gekennzeichnet, dass** die Reaktorwand (1) aus einem biegeschlaffen Material besteht.

3. Reaktor nach Ansprüche 1 oder 2, **dadurch gekennzeichnet, dass** in dem schüttbaren Sorptionsmittel (2) Heatpipes (3) vorgesehen sind.

4. Reaktor nach Anspruch 3, **dadurch gekennzeichnet, dass** die Heatpipes (3) wärmeleitend mit der Reaktorwand (1) verbunden sind.

5. Reaktor nach Anspruch 3 oder 4, **dadurch gekennzeichnet, dass** die Heatpipes (3) lose eingelegt sind.

6. Verfahren zum Herstellen eines Reaktors nach einem der Ansprüche 1 bis 5, **dadurch gekennzeichnet, dass** die Reaktorwand (1) während des Befüllens mit dem schüttgutförmigen Sorptionsmittel (2) und/oder während des Aufbringens des Unterdruckes in eine stützende Form eingebracht ist.

7. Verfahren zum Herstellen eines Reaktors nach einem der Ansprüche 1 bis 5, **dadurch gekennzeichnet, dass** der Reaktor während des Befüllens mit dem schüttgutförmigen Sorptionsmittel (2) mit einem höheren Druck beaufschlagt ist, als im späteren Betrieb.
